# EUROPEAN PATENT SPECIFICATION

(11) **EP 2 079 921 B1**
(45) Date of publication and mention of the grant of the patent: **10.07.2019**
(21) Application number: 07861634.9
(22) Date of filing: 01.11.2007
(51) Int. Cl.: F02M 37/22, B01D 39/16

(54) **FUEL FILTER**
KRAFTSTOFFFILTER
FILTRE À CARBURANT

(30) Priority: 02.11.2006 US 591733
(43) Date of publication of application: 22.07.2009
(73) Proprietor: Cummins, Inc., Columbus IN 47202 (US)
(72) Inventor: JONES, David Charles, Midlothian, VA 23113 (US); STONE, Walter H., Modesto, CA 95354 (US)
(74) Representative: Dehns
(86) International application number: PCT/US2007/023102
(87) International publication number: WO 2008/057397

(56) References cited:
- EP-A1- 1 795 250
- WO-A-02/072237
- WO-A1-97/32646
- WO-A2-02/20134
- GB-A- 2 404 347
- JP-A- 2003 236 321
- JP-A- 2005 152 769
- US-A- 5 902 480
- US-A1- 2003 141 261
- US-A1- 2006 006 109

## Description

### FIELD OF THE INVENTION

The present invention relates to the filtration of fuel, in particular fuel for diesel engines.

### BACKGROUND

The sophistication of injection equipment in modern engines requires most careful filtration to prevent the impurities present in the fuel from causing damage to, and malfunction of, the delicate injection equipment.

A technical problem which has not been adequately solved in this field is the manufacture of a fuel filter element that can achieve 99+% efficiency in removing particles of 4 microns and higher without the use of any glass media. The use of glass poses a potential threat to critical tolerances in fuel injector systems due to the potential for the discrete-length glass fibers to become separated from the filters and become lodged in the interfaces of the injector moving parts. Existing non-glass media, for example layers of meltblown and wetlaid cellulose, can achieve about 96% efficiency in a pleated filter element.

The present inventors have found a solution to this problem that does not use glass media and yet provides 99% efficiency and above.

Fuel filters using a meltblown filter layer are disclosed *inter alia* in U.S. Published Pat. Appln. No. 2006/0006109 to Klein, et al. Nonwoven webs and nanowebs have been used previously as filters for other liquids, see e.g. WO 01/83877, WO 97/32646 and U.S. Published Pat. Appln. No. 2003/0141261 to Koslow, but not as fuel filters.

### SUMMARY OF THE INVENTION

A first embodiment of the present invention is directed to an engine fuel filter, comprising a filtering mass which is contained within an enclosure, said enclosure comprising an intake port and a discharge port both in fluid contact with the filtering mass, said filtering mass being located in the enclosure so as to be crossed by the fuel in its path through the enclosure, and wherein said filtering mass comprises a first upstream scrim, a polymeric nanoweb filter layer consisting of synthetic resins, of basis weight between 2.5 g/m² (gsm) and 13 gsm, in face-to-face and fluid contact with the first upstream scrim, and a second downstream scrim in face-to-face and fluid contact with the nanoweb on the opposite side of the nanoweb to the first upstream scrim, with the proviso that the nanoweb does not contain glass.

In another embodiment, the present invention is directed to a method for filtering engine fuel comprising feeding fuel through an inlet port of a sealed enclosure, passing the fuel to a first optional coalescing medium, filtering the fuel through a filter mass, passing the fuel to a second optional coalescing medium; and discharging the fuel from the enclosure through an outlet port, wherein the filter mass comprises a first upstream scrim, a polymeric nanoweb consisting of synthetic resins, of basis weight between 2.5 gsm and 13 gsm in face-to-face and fluid contact with the first upstream scrim, and a second downstream scrim in face-to-face and fluid contact with the nanoweb on the opposite side of the nanoweb to the first upstream scrim, with the proviso that the nanoweb does not contain glass.

### DETAILED DESCRIPTION OF THE INVENTION

### Definitions

Where a range of numerical values is recited herein, unless otherwise stated, the range is intended to include the endpoints thereof, and all integers and fractions within the range. It is not intended that the scope of the invention be limited to the specific values recited when defining a range.

The term "nonwoven" means a web including a multitude of randomly oriented fibers. The fibers can be bonded to each other, or can be unbonded and entangled to impart strength and integrity to the web. The fibers can be staple fibers or continuous fibers, and can comprise a single material or a multitude of materials, either as a combination of different fibers or as a combination of similar fibers each comprised of different materials.

A nonwoven web useful in various embodiments of the invention may comprise fibers of polyethylene, polypropylene, elastomers, polyesters, rayon, cellulose, polyamides, and blends of such fibers. A number of definitions have been proposed for nonwoven fibrous webs. The fibers usually include staple fibers or continuous filaments. As used herein "nonwoven web" is used in its generic sense to define a generally planar structure that is relatively flat, flexible and porous, and is composed of staple fibers or continuous filaments. For a detailed description of nonwovens, see "Nonwoven Fabric Primer and Reference Sampler" by E. A. Vaughn, ASSOCIATION OF THE NONWOVEN FABRICS INDUSTRY, 3d Edition (1992). The nonwovens may be carded, spun bonded, wet laid, air laid, and melt blown as such products are well known in the trade.

Examples of nonwoven webs include webs of meltblown fibers, spunbond fibers, carded webs, air-laid webs, wet-laid webs, spunlaced webs, and composite webs comprising more than one nonwoven layer.

The term "meltblown web" is recognized by those having ordinary skill in the art and as used herein indicates a fibrous web of fibers formed by extruding a molten thermoplastic polymer through a plurality of fine, usually circular, die capillaries as molten threads or filaments, into a high velocity gas stream which attenuates the filaments of molten thermoplastic polymer to reduce their diameter. Exemplary processes for producing melt blown fiber web are disclosed in U.S. Pat. No. 3,849,241 to Butin, et al. and U.S. Pat. No. 4,380,570 to Schwarz. In general, melt blown fibers have an average fiber diameter of from about 2 micrometers up to about 10 micrometers.

The term "spunbond web" is recognized by those having ordinary skill in the art. As used herein it indicates a fibrous web of small diameter filaments that are formed by extruding one or more molten thermoplastic polymers as generally continuous fibers or filaments from a plurality of capillaries of a spinneret, which are cooled while being drawn by an eductor or other well-known drawing mechanism, and then deposited or laid onto a forming surface, in a random manner, to form a loosely entangled, and uniform fiber web. Typically, spunbond fibers have an average diameter of at least 10 microns. Exemplary processes for producing spunbond nonwoven webs are disclosed, for example, in U.S. Pat. No. 4,340,563 to Appel, et al.*,* U.S. Pat. No. 3,802,817 to Matsuki, et al.*,* U.S. Pat. No. 3,855,046 to Hansen, et al. and U.S. Pat. No. 3,692,618 to Dorschner, et al. Spunbonded webs are characterized by a relatively high strength/weight ratio, high porosity, having abrasion resistance properties, and typically non-uniform in such properties as basis weight and coverage.

The "nanoweb" of the present invention is a nonwoven web constructed of nanofibers. The term "nanofiber" as used herein refers to generally continuous fibers having a diameter or cross-section between 100 nanometers (nm) and 1000 nm (1 micrometer), preferably between 200 nm and 800 nm, and more preferably between 300 nm and 500 nm. The term diameter as used herein will include the greatest cross-section of non-round shapes.

One technique conventionally used to prepare polymer nanofibers is the electro-spinning process. In the electro-spinning process, a high voltage is applied to a polymer in solution to create nanofibers and nonwoven mats. The polymer solution is loaded into a syringe, and high voltage is applied to the polymer solution within the syringe. Charge builds up on a droplet of solution that is suspended at the tip of the syringe needle. Gradually, as this charge overcomes the surface tension of the solution, this droplet elongates and forms a Taylor cone. Finally, the solution exits out of the tip of the Taylor cone as a jet, which travels through the air to an electrically grounded target medium. While traveling, the solvent evaporates, leaving fibers. The products of this process also have advantages over currently available materials; the fibers are very thin and have a high length to diameter ratio, which provides a very large surface area per unit mass.

While electro-spinning is an advantageous processing method to obtain nanofibers, the production capacity for making nanowebs is extremely limited due to the low throughput of the electro-spinning process. A preferred process for forming the nanowebs of the present invention is the electroblowing process, disclosed in WO 03/080905.

The electroblowing method comprises feeding a stream of polymeric solution comprising a polymer and a solvent from a storage tank to a series of spinning nozzles within a spinneret, to which a high voltage is applied and through which the polymeric solution is discharged. Meanwhile, compressed air that is optionally heated is issued from air nozzles disposed in the sides of, or at the periphery of, the spinning nozzle. The air is directed generally in the spinning direction as a blowing gas stream which envelopes and forwards the newly issued polymeric solution and aids in the formation of the fibrous web, which is collected on a grounded porous collection belt above a vacuum chamber.

Polymers available for the invention are not restricted to thermoplastic resin, but may utilize most solvent-soluble synthetic resins, including various thermosetting resins. Examples of the available polymers may include polyimide, polyamide, polyaramide, partially aromatic polyamide, polybenzimidazole, polyetherimide, polyacrylonitrile, polyester, polyaniline, polyethylene oxide, styrene butadiene rubber, polystyrene, polyvinyl chloride, polyvinyl alcohol, polyvinylidene chloride, polyvinyl butylene and any copolymer, blend, or derivative of the preceding.

Addition polymers like polyvinylidene fluoride, syndiotactic polystyrene, copolymer of vinylidene fluoride and hexafluoropropylene, polyvinyl alcohol, polyvinyl acetate, amorphous addition polymers, such as poly(acrylonitrile) and its copolymers with acrylic acid and methacrylates, polystyrene, poly(vinyl chloride) and its various copolymers, poly(methyl methacrylate), and its various copolymers, can be solution spun with relative ease because they are soluble at low pressures and temperatures.

### Design of the Filter

The filter comprises an enclosure through which fuel is passed. Any shape or configuration that allows fuel to pass through the filter mass is encompassed by the scope of the claims herein.

The filtering mass is located in the enclosure so as to be crossed by the fuel in its path through the enclosure, and wherein said filtering mass comprises a first upstream scrim, a polymeric nanoweb as defined above of basis weight between 2.5 gsm and 13 gsm in face-to-face and fluid contact with the first upstream scrim, and a second downstream scrim in face-to-face and fluid contact with the nanoweb, and wherein the nanoweb does not contain glass.

In alternative examples of the filter for engine fuel, said polymeric nanoweb may have a basis weight of between 2.5 gsm and 40 gsm, 3.5 gsm and 40 gsm, 4.0 gsm and 40 gsm, 2.5 gsm and 37 gsm, 2.5 gsm and 34 gsm, 2.5 gsm and 31 gsm, 2.5 gsm and 28 gsm, 2.5 gsm and 25 gsm, 2.5 gsm and 22 gsm, 2.5 gsm and 19 gsm, 2.5 gsm and 16 gsm. Other ranges of polymeric nanoweb basis weight such as between 2.5 gsm and 10 gsm, 2.5 gsm and 7 gsm, and 2.5 gsm and 4 gsm, are included in embodiments of the present invention. Among polymeric nanoweb basis weights such as 3, 3.5, 4, 4.5, 5, 5.5,...up to 40 gsm, those up to 13 gsm are included in the present invention, while those above 13 gsm are merely alternative examples not covered by the claims.

The first upstream scrim in the fuel filter comprises a nonwoven web of basis weight between 30 gsm and 200 gsm and may be selected from the group consisting of a spunbond nonwoven web, a carded nonwoven web, a meltblown nonwoven web, paper, and a combination or laminate of the foregoing.

In a further embodiment of the invention, the second downstream scrim further comprises a mass of paper containing predominantly cellulose. In particular, the predominantly cellulose mass preferably comprises a filter paper containing predominantly cellulose having a basis weight of 50 gsm to 200 gsm. The predominantly cellulose mass can also be calendared or compressed. According to the invention, the second downstream scrim comprises a meltblown nonwoven web having a basis weight of 15 gsm to 200 gsm. The meltblown nonwoven web is optionally calendared.

In one example of a filter construction, the filter will be configured as a housing in the form of a pot. The upper part of the housing is closed by a cover. The cover has inlet openings for fuel to flow in and an outlet opening through which filtered fuel can be removed. A water discharge valve is preferably provided on a pipe connection at the lower end of the housing. Inside the housing, there is a rising pipe which is provided with openings in the area of the particle filter element.

The filter mass, which is placed over the rising pipe, is comprised of a filter material optionally folded in zigzag pleats, which can also optionally be composed of a plurality of layers. An upstream or downstream element can optionally be present to coalesce any water that may be present in the fuel. The filter mass can also present a flat, curved, or pleated surface to the fuel. The component nanoweb and scrims of the filter mass can be bonded to each other or unbonded. Bonding can be accomplished by any means known to one skilled in the art, for example adhesive, thermal, or ultrasonic bonding.

In a typical operation, the medium to be cleaned, e.g., diesel fuel, flows in through the inlet opening and then flows through the filter mass. Any water in the fuel coalesces to larger collections or droplets, and then flows and collects in an underlying water collecting area or reservoir at the bottom of the filter housing. The fuel to be filtered flows through the filter mass from the outside to the inside and is filtered in the filter mass. Advantageously, the filter mass has a hydrophobic surface to facilitate water separation. Fuel may flow either radially or axially through the filter mass.

If desired, the filter mass can be comprised of multiple layers of a filter medium which exhibit increasing degrees of separation for the particles to be filtered in the direction of fuel flow through the filter. In one embodiment, the filter layer on the incoming flow side is made of synthetic fibers, and the filter layer on the outgoing flow side is made of paper containing predominantly cellulose. Optionally, the filter layer on the incoming flow side comprises a meltblown nonwoven web having a basis weight of 15 gsm to 300 gsm, and the filter layer on the outgoing flow side comprises an optionally calendared or compressed filter paper containing predominantly cellulose having a basis weight of 50 gsm to 200 gsm. In another preferred embodiment, the particle filter may comprise an optionally calendared meltblown nonwoven layer having a basis weight of 15 gsm to 300 gsm, between the filter layer on the incoming flow side and the filter layer on the outgoing flow side.

Upon leaving the filter element, the filtered fuel flows through the outlet opening or openings. If water has collected in the water reservoir up to a certain level, it can be removed through the water discharge valve.

### EXAMPLES

For the results in Table 1, the test method used was "Fuel Filter Single Pass Efficiency" per SAE J 1985-93. Fluid was Viscor 4264 (Rock Valley Oil and Chemical Co., Rockford, IL). The test conditions were as follows:

| | |
|---|---|
| Flow Rate: | 0.000782 L/min/cm² (1.2 gal/min per 896 in² medium); |
| Contaminant: | ISO Fine Test Dust, 3-20µm diameter; |
| Fluid: | Viscor 4264; |
| Temperature: | 40°C. |
| Flat sheet samples were used of a filter mass consisting of (with fluid flowing into the three layered PET meltblown nonwoven): | Three layered PET meltblown nonwoven/Nanoweb/PET spunbond nonwoven of 70 gsm /PET meltblown nonwoven + Wetlaid Cellulose. |

Table 1 summarizes filtration efficiency data for 4 µm particle size.

**TABLE 1**

| Nanoweb basis weight (gsm) | Pressure Drop (kPa) | Efficiency after 2 minutes | Efficiency after 60 minutes | Average over 60 minutes |
|---|---|---|---|---|
| 0 | 1.4 | 96.45% | 62.77% | 75.23% |
| 4 | 2.1 | 99.35% | 97.63% | 98.24% |
| 5 | 2.1 | 99.47% | 98.86% | 99.03% |
| 10 | 2.1 | 99.92% | 99.98% | 99.96% |
| 15 | 2.1 | 99.90% | 99.99% | 99.97% |

In the second set of experiments, the filter-mass layering was identical to the test product used for Table 1 with the following test conditions:

| | |
|---|---|
| Liquid: | CARB diesel fuel was used as the liquid on a pleated filter containing 3896 cm² of filter media; |
| Flow Rate: | 0.0011653 L/min/cm²; |
| Contaminant: | ISO 12103-1 A3 medium test dust, 1-120 µm diameter. |

Table 2 summarizes filtration efficiency data for 4 µm particle size.

**TABLE 2**

| Nanoweb weight (gsm) | Pressure Drop (kPa) | Average over 60 minutes |
|---|---|---|
| 4 | 25.5 | 99.80% |
| 5 | 25.5 | 99.90% |
| 10 | 25.5 | 100.00% |

The superiority of the claimed filter both initially and over time is clearly demonstrated by these data.

## Claims

1. An engine fuel filter, comprising a filtering mass which is contained within an enclosure, said enclosure comprising an intake port and a discharge port both in fluid contact with said filtering mass, said filtering mass being located in said enclosure so as to be crossed by the fuel in its path through said enclosure, and wherein said filtering mass comprises
(i) a first upstream scrim comprising a nonwoven web having basis weight between 30 g/m² and 200 g/m²;
(ii) a polymeric filter layer consisting of synthetic resins and in face-to-face and fluid contact with the first upstream scrim;
(iii) a second downstream scrim comprising a meltblown nonwoven web having basis weight between 15 g/m² and 200 g/m², in face-to-face and fluid contact with said filter layer on a side of said filter layer opposite to the first upstream scrim;
**characterised in that** said filter layer is a nanoweb of basis weight between 2.5 g/m² and 13 g/m² and said nanoweb comprises fibers of average diameter between 100 nm and 1,000 nm and does not contain glass.

2. The engine fuel filter as recited in claim 1, wherein said polymeric nanoweb consists of nanofibers of a polymer selected from the group consisting of a polyimide, an aliphatic polyamide, an aromatic polyamide, a partially aromatic polyamide, polysulfone, cellulose acetate, polyether sulfone, polyurethane, poly(urea urethane), polybenzimidazole, polyetherimide, polyacrylonitrile, poly(ethylene terephthalate), polyaniline, poly(ethylene oxide), poly(ethylene naphthalate), poly(butylene terephthalate), polystyrene, poly(vinyl chloride), poly(vinyl alcohol), poly(vinylidene fluoride), poly(vinyl butylene), copolymers of polyvinylidene fluoride, syndiotactic polystyrene, copolymer of vinylidene fluoride and hexafluoropropylene, polyvinyl alcohol, polyvinyl acetate, copolymers of poly(acrylonitrile) with acrylic acid, copolymers of poly(acrylonitrile) with methacrylates, polystyrene, poly(vinyl chloride), poly(methyl methacrylate), blends thereof, copolymers thereof, and derivative compounds thereof.

3. The engine fuel filter as recited in claim 1 or 2, wherein said polymeric nanoweb comprises fibers of average diameter between 200 and 800 nm.

4. The engine fuel filter as recited in claim 1 or 2, wherein said polymeric nanoweb comprises fibers of average diameter between 300 and 500 nm.

5. The engine fuel filter as recited in any one of claims 1-4, wherein said nonwoven web is selected from the group consisting of a spunbond nonwoven web, a carded nonwoven web, a meltblown nonwoven web, paper, a combination thereof, and a laminate thereof.

6. The engine fuel filter as recited in any one of claims 1-5, wherein said enclosure is cylindrical and said filtering mass is located coaxially with the circumference of the curved surface of said enclosure and is optionally pleated.

7. The engine fuel filter as recited in any one of claims 1-6, wherein said enclosure further comprises a water collection chamber.

8. The engine fuel filter as recited in any one of claims 1-7, wherein said filtering mass is comprised of multiple layers of a filter medium, wherein said multiple layers exhibit an increasing degree of separation for the particles to be filtered out in the direction of flow.

9. The engine fuel filter as recited in any one of claims 1-8, wherein said second downstream scrim further comprises a nonwoven mass located on the downstream side of said filtering mass.

10. The engine fuel filter as recited in claim 11, wherein said nonwoven mass comprises a filter paper comprising cellulose having a basis weight between 50 g/m² and 300 g/m².

11. The engine fuel filter as recited in claim 10, wherein said nonwoven mass is calendared or compressed.

12. The engine fuel filter as recited in claim 1, wherein said meltblown nonwoven web is calendared.

13. A method for filtering engine fuel comprising:
(A) feeding fuel through an inlet port of a sealed enclosure;
(B) passing the fuel to a first optional coalescing medium;
(C) filtering the fuel through a filtering mass; wherein said filtering mass comprises
(i) a first upstream scrim comprising a nonwoven web having basis weight between 30 g/m² and 200 g/m²;
(ii) a polymeric filter layer consisting of synthetic resins and in face- to-face and fluid contact with the first upstream scrim; and
(iii) a second downstream scrim comprising a meltblown nonwoven web having basis weight between 15 g/m² and 200 g/m², in face-to-face and fluid contact with said filter layer on a side of said filter layer opposite to the first upstream scrim;
(D) passing the fuel to a second optional coalescing medium; and
(E) discharging the fuel from the enclosure through an outlet port;
**characterised in that** said filter layer is a nanoweb of basis weight between 2.5 g/m² and 13 g/m² and said nanoweb comprises fibers of average diameter between 100 nm and 1,000 nm and does not contain glass.

14. The method as recited in claim 13, wherein said filtering mass is as defined in any one of claims 2-5 and 8-12.

## Patentansprüche

1. Motorkraftstofffilter, umfassend eine Filtermasse, die in einem Gehäuse enthalten ist, das Gehäuse umfassend eine Einlassöffnung und eine Auslassöffnung, die beide in Fluidkontakt mit der Filtermasse sind, wobei sich die Filtermasse in dem Gehäuse befindet, sodass sie vom Kraftstoff auf dessen Weg durch das Gehäuse durchquert wird, und wobei die Filtermasse umfasst
(i) einen ersten stromaufwärtigen Gitterstoff, umfassend eine Vliesbahn, die ein Basisgewicht zwischen 30 g/m² und 200 g/m² aufweist;
(ii) eine Polymerfilterschicht, die aus Kunstharzen besteht und in Fläche-zu-Fläche- und Fluidkontakt mit dem ersten stromaufwärtigen Gitterstoff ist;
(iii) einen zweiten stromabwärtigen Gitterstoff, umfassend eine schmelzgeblasene Vliesbahn, die ein Basisgewicht zwischen 15 g/m² und 200 g/m² aufweist, die in Fläche-zu-Fläche- und Fluidkontakt mit der Filterschicht auf einer Seite der Filterschicht gegenüber dem ersten stromaufwärtigen Gitterstoff ist;
**dadurch gekennzeichnet, dass** die Filterschicht eine Nanobahn eines Basisgewichts zwischen 2,5 g/m² und 13 g/m² ist und die Nanobahn Fasern eines durchschnittlichen Durchmessers zwischen 100 nm und 1.000 nm umfasst und kein Glas enthält.

2. Motorkraftstofffilter nach Anspruch 1, wobei die Polymernanobahn aus Nanofasern eines Polymers besteht, das ausgewählt ist aus der Gruppe, bestehend aus einem Polyimid, einem aliphatischen Polyamid, einem aromatischen Polyamid, einem teilaromatischen Polyamid, Polysulfon, Celluloseacetat, Polyethersulfon, Polyurethan, Poly(harnstoffurethan), Polybenzimidazol, Polyetherimid, Polyacrylnitril, Poly(ethylenterephthalat), Polyanilin, Poly(ethylenoxid), Poly(ethylennaphthalat), Poly(butylenterephthalat), Polystyrol, Poly(vinylchlorid), Poly(vinylalkohol), Poly(vinylidenfluorid), Poly(vinylbutylen), Copolymeren von Polyvinylidenfluorid, syndiotaktischem Polystyrol, Copolymer von Vinylidenfluorid und Hexafluorpropylen, Polyvinylalkohol, Polyvinylacetat, Copolymeren von Poly(acrylnitril) mit Acrylsäure, Copolymeren von Poly(acrylnitril) mit Methacrylaten, Polystyrol, Poly(vinylchlorid), Poly(methylmethacrylat), Mischungen davon, Copolymeren davon und Derivatverbindungen davon.

3. Motorkraftstofffilter nach Anspruch 1 oder 2, wobei die Polymernanobahn Fasern eines durchschnittlichen Durchmessers zwischen 200 und 800 nm umfasst.

4. Motorkraftstofffilter nach Anspruch 1 oder 2, wobei die Polymernanobahn Fasern eines durchschnittlichen Durchmessers zwischen 300 und 500 nm umfasst.

5. Motorkraftstofffilter nach einem der Ansprüche 1-4, wobei die Vliesbahn ausgewählt ist aus der Gruppe, bestehend aus einer Spinnvliesbahn, einer kardierten Vliesbahn, einer schmelzgeblasenen Vliesbahn, Papier, einer Kombination davon und einem Laminat davon.

6. Motorkraftstofffilter nach einem der Ansprüche 1-5, wobei das Gehäuse zylindrisch ist und sich die Filtermasse koaxial zu dem Umfang der gekrümmten Oberfläche des Gehäuses befindet und optional plissiert ist.

7. Motorkraftstofffilter nach einem der Ansprüche 1-6, wobei das Gehäuse weiter eine Wasserauffangkammer umfasst.

8. Motorkraftstofffilter nach einem der Ansprüche 1-7, wobei die Filtermasse mehrere Schichten eines Filtermediums umfasst, wobei die mehreren Schichten einen zunehmenden Grad an Trennung für die Partikel vorweisen, die in der Strömungsrichtung herauszufiltern sind.

9. Motorkraftstofffilter nach einem der Ansprüche 1-8, wobei der zweite stromabwärtige Gitterstoff weiter eine Vliesmasse umfasst, die sich an der stromabwärtigen Seite der Filtermasse befindet.

10. Motorkraftstofffilter nach Anspruch 11, wobei die Vliesmasse ein Filterpapier umfasst, das Cellulose umfasst, die ein Basisgewicht zwischen 50 g/m² und 300 g/m² aufweist.

11. Motorkraftstofffilter nach Anspruch 10, wobei die Vliesmasse kalandriert oder komprimiert ist.

12. Motorkraftstofffilter nach Anspruch 1, wobei die schmelzgeblasene Vliesbahn kalandriert ist.

13. Verfahren zum Filtern von Motorkraftstoff, umfassend:
(A) Zuführen von Kraftstoff durch eine Einlassöffnung eines abgedichteten Gehäuses;
(B) Leiten des Kraftstoffs zu einem ersten optionalen Koaleszenzmedium;
(C) Filtern des Kraftstoffs durch eine Filtermasse; wobei die Filtermasse umfasst
(i) einen ersten stromaufwärtigen Gitterstoff, umfassend eine Vliesbahn, die ein Basisgewicht zwischen 30 g/m² und 200 g/m² aufweist;
(ii) eine Polymerfilterschicht, die aus Kunstharzen zusammengesetzt und in Fläche-zu-Fläche- und Fluidkontakt mit dem ersten stromaufwärtigen Gitterstoff ist; und
(iii) einen zweiten stromabwärtigen Gitterstoff, umfassend eine schmelzgeblasene Vliesbahn, die ein Basisgewicht zwischen 15 g/m² und 200 g/m² aufweist, in Fläche-zu-Fläche- und Fluidkontakt mit der Filterschicht auf einer Seite der Filterschicht gegenüber dem ersten stromaufwärtigen Gitterstoff;
(D) Leiten des Kraftstoffs zu einem zweiten optionalen Koaleszenzmedium; und
(E) Ablassen des Kraftstoffs aus dem Gehäuse durch eine Auslassöffnung;
**dadurch gekennzeichnet, dass** die Filterschicht eine Nanobahn eines Basisgewichts zwischen 2,5 g/m² und 13 g/m² ist und die Nanobahn Fasern eines durchschnittlichen Durchmessers zwischen 100 nm und 1.000 nm umfasst und kein Glas enthält.

14. Verfahren nach Anspruch 13, wobei die Filtermasse wie in einem der Ansprüche 2-5 und 8-12 definiert ist.

## Revendications

1. Filtre à carburant pour moteur, comprenant une masse filtrante qui est contenue dans une enceinte, ladite enceinte comprenant un orifice d'admission et un orifice d'évacuation, tous les deux en contact fluidique avec ladite masse filtrante, ladite masse filtrante étant située dans ladite enceinte de sorte à être traversée par le carburant dans son trajet au travers de ladite enceinte, et dans lequel ladite masse filtrante comprend
(i) une première mousseline amont comprenant une toile non tissée présentant un poids de base entre 30 g/m² et 200 g/m² ;
(ii) une couche de filtre de polymère composée de résines synthétiques et en contact face à face et fluidique avec la première mousseline amont ;
(iii) une seconde mousseline aval comprenant une toile non tissée soufflée et fondue présentant un poids de base entre 15 g/m² et 200 g/m², en contact face à face et fluidique avec ladite couche de filtre sur un côté de ladite couche de filtre opposée à la première mousseline amont ;
**caractérisé en ce que** ladite couche de filtre est une toile de nanofibres de poids de base entre 2,5 g/m² et 13 g/m² et ladite toile de nanofibres comprend des fibres de diamètre moyen entre 100 nm et 1 000 nm et ne contient pas de verre.

2. Filtre à carburant pour moteur selon la revendication 1, dans lequel ladite toile de nanofibres de polymère se compose de nanofibres d'un polymère sélectionné à partir du groupe constitué par un polyimide, un polyamide aliphatique, un polyamide aromatique, un polyamide partiellement aromatique, un polysulfone, un acétate de cellulose, un sulfone de polyéther, un polyuréthane, un poly(urée uréthane), un polybenzimidazole, un polyétherimide, un polyacrylonitrile, un poly(éthylène téréphtalate), un polyaniline, un poly(éthylène oxyde), un poly(éthylène naphtalate), un poly(butylène téréphtalate), un polystyrène, un poly(vinyle chlorure), un poly(vinyl alcool), un poly(vinylidène fluorure), un poly(vinyle butylène), des copolymères de fluorure de polyvinylidène, un polystyrène syndiotactique, un copolymère de fluorure de vinylidène et un hexafluoropropylène, un alcool de polyvinyle, un acétate de polyvinyle, des copolymères de poly(acrylonitrile) avec acide acrylique, des copolymères de poly(acrylonitrile) avec des méthacrylates, un polystyrène, un poly(vinyle chlorure), un poly(méthyle méthacrylate), des mélanges de ceux-ci, des copolymères de ceux-ci, et des composites dérivés de ceux-ci.

3. Filtre à carburant pour moteur selon la revendication 1 ou 2, dans lequel ladite toile de nanofibres de polymère comprend des fibres de diamètre moyen entre 200 et 800 nm.

4. Filtre à carburant pour moteur selon la revendication 1 ou 2, dans lequel ladite toile de nanofibres de polymère comprend des fibres de diamètre moyen entre 300 et 500 nm.

5. Filtre à carburant pour moteur selon l'une quelconque des revendications 1-4, dans lequel ladite toile non-tissée est sélectionnée à partir du groupe constitué par une toile non-tissée filée et nappée, une toile non-tissée cardée, une toile non-tissée soufflée et fondue, du papier, une combinaison de ceux-ci, et un stratifié de ceux-ci.

6. Filtre à carburant pour moteur selon l'une quelconque des revendications 1-5, dans lequel ladite enceinte est cylindrique et ladite masse filtrante est située coaxialement avec la circonférence de la surface courbée de ladite enceinte et est en option plissée.

7. Filtre à carburant pour moteur selon l'une quelconque des revendications 1-6, dans lequel ladite enceinte comprend en outre une chambre de collecte d'eau.

8. Filtre à carburant pour moteur selon l'une quelconque des revendications 1-7, dans lequel ladite masse filtrante est composée de multiples couches d'un support de filtre, dans lequel lesdites multiples couches montrent un degré de séparation croissant pour les particules à filtrer dans la direction de flux.

9. Filtre à carburant pour moteur selon l'une quelconque des revendications 1-8, dans lequel ladite mousseline aval comprend en outre une masse non-tissée située sur le côté aval de ladite masse filtrante.

10. Filtre à carburant pour moteur selon la revendication 11, dans lequel ladite masse non-tissée comprend un papier de filtre comprenant la cellulose présentant un poids de base entre 50 g/m² et 300 g/m².

11. Filtre à carburant pour moteur selon la revendication 10, dans lequel ladite masse non-tissée est calandrée ou compressée.

12. Filtre à carburant pour moteur selon la revendication 1, dans lequel ladite toile non-tissée soufflée et fondue est calandrée.

13. Procédé de filtration de carburant pour moteur comprenant :
(A) l'alimentation en carburant au travers d'un orifice d'entrée d'une enceinte scellée ;
(B) le passage du carburant dans un premier support coalescent optionnel ;
(C) la filtration du carburant au travers d'une masse filtrante; dans lequel ladite masse filtrante comprend
(i) une première mousseline amont comprenant une toile non-tissée présentant un poids de base entre 30 g/m² et 200 g/m² ;
(ii) une couche de filtre de polymère composée de résines synthétiques et en contact face à face et fluidique avec la première mousseline amont ; et
(iii) une seconde mousseline aval comprenant une toile non-tissée soufflée et fondue présentant un poids de base entre 15 g/m² et 200 g/m²,
en contact face à face et fluidique avec ladite couche de filtre sur un côté de ladite couche de filtre opposée à la première mousseline amont ;
(D) le passage du carburant à un second support coalescent optionnel ; et
(E) l'évacuation du carburant de l'enceinte au travers d'un orifice de sortie ;
**caractérisé en ce que** ladite couche de filtre est une toile de nanofibres de poids de base entre 2,5 g/m² et 13 g/m² et ladite toile de nanofibres comprend des fibres de diamètre moyen entre 100 nm et 1 000 nm et ne contient pas de verre.

14. Procédé selon la revendication 13, dans lequel ladite masse filtrante est définie selon l'une quelconque des revendications 2-5 et 8-12.
